# EUROPÄISCHE PATENTSCHRIFT

(11) **EP 0 293 576 B1**
(45) Veröffentlichungstag und Bekanntmachung des Hinweises auf die Patenterteilung: **09.06.1993**
(21) Anmeldenummer: 88105601.4
(22) Anmeldetag: 08.04.1988
(51) Int. Cl.: G01N 21/89, G01N 21/55, G01N 21/59, G07D 7/00, B44F 1/00

(54) **Verfahren zum Erfassen von Dimensionsfehlern**
Procedure for registering dimensional errors
Procédé d'acquisition des fautes dimensionnelles

(30) Priorität: 18.04.1987 DE 3713279
(43) Veröffentlichungstag der Anmeldung: 07.12.1988
(73) Patentinhaber: LASOR Laser Sorter GmbH, D-33813 Oerlinghausen (DE)
(72) Erfinder: Gausa, Alexander, Dipl.-Ing., D-4800 Bielefeld 12 (DE)
(74) Vertreter: Schulz, Wilfried, Dipl.-Ing.

(56) Entgegenhaltungen:
- EP-A- 0 146 403
- AT-B- 338 544
- DE-A- 2 035 079
- DE-A- 2 322 803
- DE-A- 3 248 782

## Beschreibung

Die Erfindung betrifft ein Verfahren zum Erfassen von Dimensionsfehlern und/oder dem Verzug von mit Wasserzeichen versehenen Papieren, wie Formatpapieren, insbesondere aber Wertpapieren. Sie wird nachstehend als Beispiel für die Prüfung von Wertpapieren beschrieben, die zur Herstellung von Banknoten dienen sollen.

Bei der Herstellung von Banknoten geht man im allgemeinen von einem Papier aus, das mit Wasserzeichen und Sicherheitsfäden versehen ist. In der fertigen Banknote sollen dabei die Sicherheitsfäden in einem bestimmten Bereich angeordnet sein, ebenso soll das oder die Wasserzeichen sich in einem bestimmten Bereich der Banknote befinden. Bereits beim Herstellen des Rohpapiers auf der Papiermaschine kann sich ebenso wie später beim Schneiden auf dem Rollenschneider sowie auf dem Querschneider ein gewisser Verzug des Papieres durch ungenaue Führung oder ein ungleichmäßiges Feuchtigkeitsprofil ergeben, d. h., daß Dehnungen in das Papier eingebracht wurden. Damit befinden sich die Wasserzeichen nicht mehr in der exakt vorgegebenen Position. Um hier eine Kontroll- und Steuerungsmöglichkeit für den Längsschnitt zu haben, ist es bekannt, eine sogenannte tracking-line, also eine Strichpunktmarkierung in Form eines Wasserzeichens am Rande der Papierbahn und ggf. in der Mitte der Papierbahn bei der Herstellung einzubringen, desweiteren können quer zur Papierbahn Steuermarken für den Querschneider angeordnet sein.

Um Änderungen im Format oder einen Verzugsfehler zu finden, ist es derzeit üblich, nach dem Querschneiden die einzelnen Bogen von Hand mit einer Schnittkante oder einer Längskante auf eine transparente von unten beleuchtete Scheibe zu legen und mit dem Auge im Durchlicht zu überprüfen, ob die Position der Wasserzeichen und die Lage des Sicherheitsfadens mit der vorgegebenen Lage übereinstimmt. Wie üblich, befindet sich dabei auf jedem einzelnen Bogen der später bedruckbare Bereich, der sogenannte Nutzen, wobei sich die Steuermarken und die tracking-line außerhalb des Nutzens befindet. Bisher wird die Papierkante oder die tracking-line als Bezugskante beim Schneiden der Bahn im Längsroller und die Steuermarke beim Schneiden der Bahn im Querschneider benutzt. Für eine exakte Vermessung sind jedoch beide Markierungen ungeeignet.

Die AT-B-338 544 beschreibt eine Einrichtung zum Erkennen von Fehlern, wie Flecken, Falten, Einschlüssen, Löchern o. dgl. in Papierbahnen mit erlaubten Inhomogenitäten, die mindestens zwei parallele und bezüglich der Inhomogenitäten identische Teilbahnen aufweist, insbesondere zum Erkennen von Fehlern in Papierbahnen, die zum Herstellen von Geld- oder Papierscheinen dienen und die als erlaubte Inhomogenitäten Wasserzeichen, Sicherheitsfäden u. dgl. enthalten.

Dabei ist jeder Teilbahn eine fotoelektrische Abtasteinrichtung mit einer oder mehreren Fotozellen zugeordnet, mittels denen homologe Punkte bzw. Bereiche der Teilbahnen abgetastet werden. Zum Ausgleich von Lagetoleranzen der Inhomogenitäten, die durch die Schrumpfung während der Trocknung auf der Papiermaschine entstehen können, ist eine Reglereinrichtung vorgesehen, die so gesteuert wird, daß die Abtasteinrichtungen bei Auftreten von Inhomogenitäten jeweils in die gleiche Position bezüglich dieser Inhomogenitäten gebracht werden. Bei der Abtastung werden Vergleichssignale erzeugt, die über Differenzierschaltungen einer Differenzschaltung zum Vergleich zugeführt werden.

Mittels einer zusätzlichen Vorabtastung wird die Lageabweichung der beiden miteinander zu vergleichenden Merkmale festgestellt und die Abtastsignale einer Regelschaltung zugeführt, die eine Einstellung der eigentlichen Abtasteinrichtungen entsprechend der Lageabweichung in die Sollstellung bewirkt. Zur Feststellung der Istlage werden die Randzonen der Merkmale abgetastet oder solche Stellen in dem Merkmal als Bezugspunkt gewählt, die sich besonders kontrastreich hervorheben.

Zur Bildung der Fehlersignale werden je zwei Abtastsignale einem Differenzverstärker zugeführt, der dann ein Ausgangssignal liefert, das bei fehlerfreiem Papier und Übereinstimmung der Merkmale eine minimale Größe hat.

Nachteilig bei dieser Einrichtung ist, daß jeder Teilbahn eine eigene Abtasteinrichtung mit zusätzlicher Vorabtastung zugeordnet werden muß, die wiederum über eine jeweils gesonderte Reglereinrichtung die Abtasteinrichtung auf die jeweils gleiche Position verschieben muß, so daß das relativ träge arbeitende Gesamtsystem nur begrenzte Sortiergeschwindigkeiten zuläßt. Das führte dazu, daß auf eine zusätzliche manuell durchgeführte Sichtprüfung insbesondere wegen des Verzuges derartiger Papiere nach wie vor nicht verzichtet werden konnte.

Der Erfindung liegt damit die Aufgabe zugrunde, die bisher manuell durchgeführte Sichtprüfung von mit Wasserzeichen versehenen Papieren zu automatisieren und damit eine Prüfung des Papieres sowohl bei der Verarbeitung als auch auf der Papiermaschine zu ermöglichen, die Prüfgeschwindigkeit erheblich zu erhöhen, die Prüfgenauigkeit zu präzisieren und damit das Einhalten geringerer Toleranzen zu ermöglichen.

Bei einem Verfahren zur Erfassung von Dimensionsfehlern und/oder dem Verzug von mit Wasserzeichen versehenen Papieren, wie Formatpapieren, insbesondere Wertpapieren, wird diese Aufgabe dadurch gelöst, daß bei der Papierherstellung in der Naßpartie der Papiermaschine zusätzlich zu den vorgesehenen Wasserzeichen pro Bogenbereich mindestens zwei sich im Bogenzwischenbereich gegenüberliegende Meßmarken als Wasserzeichen angebracht werden, die im Vergleich zur Breite der Papierbahn klein, jedoch größer als der Durchmesser des abtastenden Lichtpunktes sind und wobei diese Meßmarken scharfkantig und kontrastreich ausgebildet sind, die fertige Papierbahn oder die Formatpapiere mit einem fliegenden Lichtpunkt abgetastet, das reflektierte oder durchgelassene Licht über fotoelektrische Wandler erfaßt und die aus den Meßmarken herrührenden Impulse im Analogsignal von einem Meßmarkenrechner ausgewertet werden, die vom Meßmarkenrechner ermittelten Werte einem Auswerterechner übergeben werden, der die X-Y-Positionen der einzelnen Meßmarken miteinander vergleicht- und darauf die Bogenlänge, die Bogenbreite und den Bogenverzug berechnet.

Unter Bogenbereich im Sinne der vorliegenden Erfindung wird der Bereich einer Papierbahn verstanden, der nach dem Zuschneiden auf ein Formatpapier den Bogen bildet. Im Normalfall handelt es sich um den Bereich, der zwischen zwei Querschneidersteuermarken liegt.

Die beiden punktförmigen Meßmarken, die im definierten Abstand zueinander angeordnet sind, ermöglichen durch die Messung dieses Abstands und Vergleich des Abstands mit einem vorgegebenen, festen Wert eine Aussage darüber, ob aufgrund einer Querdehnung ein Verzug des Bogens erfolgt ist. Analoges gilt für aufeinanderfolgende Meßmarken in Bezug auf die Änderung der Bogenlänge.

Wird beim Abtasten in einer Linie, also bei einem Scan nur eine Meßmarke in einem Bogenbereich ermittelt - wobei durchaus gleichzeitig mehrere Bogenbereiche verteilt über die Breite der Materialbahn abgetastet werden können -, wo ergibt sich daraus, daß der Bogen bzw. Bogenbereich verzogen ist. Dieser Verzug kann über die Bahnbreite der Materialbahn durchaus unterschiedlich sein, weshalb für jeden Bogenbereich bzw. Bogen eine Wertung und eine Aussage erforderlich ist. Die Zahl der Scans, bei denen nur eine Meßmarke im Bogenbereich erfaßt wird bzw. auch noch die Zahl der Scans, die bis zum Erfassen einer an anderer Position angeordneten Meßmarke, also der zweiten Meßmarke, erfolgen, sind ein Maß für die Größe des Verzuges, d. h., daß er sich daraus exakt berechnen läßt.

Wesentlich für die Auswertung ist, daß die Meßmarken scharfkantig und kontrastreich sind, so daß dadurch ein scharfer Impuls geliefert wird. Die Meßmarken sind deshalb zweckmäßig in der Form von Vertiefungen mit quadratischer Grundfläche eingebracht, die eine Seitenlänge zwischen 2 und 5 mm aufweisen. Die obere Grenze dieser Quadrate ist dabei weniger kritisch als die Tatsache, daß die Quadrate scharfkantig und kontrastreich sein müssen, da bei der Auswertung vom sogenannten Kantenimpuls ausgegangen wird.

Die scharfe Kante ist deshalb erforderlich, um immer einen an exakt der gleichen Stelle sich befindlichen Kantenimpuls auslösen zu können. Lediglich durch das Vorhandensein dieser scharf örtlich begrenzten Markierungen ist eine exakte Messung und Auswertung möglich. Der weitere bedeutende Punkt ist der Kontrast. Ohne einen ausreichenden Kontrast, der sich genügend vom allgemeinen Rauschpegel abhebt, ist eine exakte Auswertung nicht möglich. Die Erfindung sieht deshalb vor, daß die Tiefe der Meßmarken 40 bis 80 % der Papierdicke beträgt. Diese Angabe ist besonders bei der Prüfung in Transmission von Bedeutung, ergibt aber auch in der Remissionsprüfung brauchbare Werte.

Eine bevorzugte Ausgestaltung der Erfindung sieht vor, daß die Abtastung durch einen fliegenden Lichtpunkt erfolgt, der einen Durchmesser zwischen 500 und 1.200 µm aufweist. Je näher sich dabei am unteren Lichtpunktdurchmesser arbeiten läßt, desto größer ist natürlich die Genauigkeit, die bei der Auswertung erzielt werden kann.

Bei der Festlegung des Durchmessers des fliegenden Lichtpunktes ist aber zu beachten, daß selbstverständlich auch die "Wolkigkeit" des Papieres, also die lokale Transmissionsvariation durch die Faserverteilung und Fasergröße im Papier, die Auswertung beeinflussen. Wird mit einem sehr kleinen Lichtpunkt gearbeitet und handelt es sich um ein stark "wolkiges" Papier, so ergibt die "Wolkigkeit" durch die starken Veränderungen der Transparenzeigenschaften schon in sehr eng benachbarten Bereichen im Papier allein schon starke Unterschiede im reflektierten oder transmittierten Licht, welche zu einem entsprechenden Ausschlag bzw. Impuls führen und den Störpegel des Untergrundrauschens darstellen. Bei stark "wolkigen" Papieren empfiehlt es sich deshalb, mit einer Lichtpunktgröße zu arbeiten, die mehr im oberen Bereich, beispielsweise bei 1.000 µ liegt, um so eine gewisse glättende und integrierende Wirkung und damit ein verbessertes Signal zu Rausch/Verhältnis zu erzielen.

Eine besonders bevorzugte Ausgestaltung der Erfindung sieht vor, daß die Abtastung einzelner Bereiche mit unterschiedlicher Empfindlichkeit erfolgt. Diese Ausgestaltung ist deshalb so wesentlich, weil bei der Prüfung von Wertpapieren außer den Wasserzeichen auch noch Sicherheitsfäden vorhanden sind. Dabei liefern sowohl die Wasserzeichen als auch die Sicherheitsfäden Impulse, deren Amplitude deutlich über dem Velinbereich liegt und die dann bei der Auswertung als Fehler interpretiert wird. Unter dem Begriff Velinbereich wird bei Wertpapieren der Bereich verstanden, in dem das Rohpapier keinerlei Markierungen, Einlagerungen usw. aufweist. Dieser Bereich muß selbstverständlich auch geprüft werden, da er bei der Papierherstellung ebenfalls mit Fehlern behaftet sein kann. Durch die Vorgabe, die Bereiche, in denen sich Wasserzeichen, Meßmarken oder Sicherheitsfäden befinden, mit einer geringeren Empfindlichkeit abzutasten, können die Impulse, die von Sicherheitsfäden, Wasserzeichen und Meßmarken herrühren, in diesen Bereichen den dort erhöhten Schwellwert nicht überschreiten, so daß sie unterhalb der Schwelle liegen und zu keinem Fehlersignal innerhalb der Fehlerauswertungselektronik führen. Alternativ werden stattdessen die Bereiche, in denen keine Meßmarken sind bzw. erwartet werden, mit einer dagegen gesehen höheren Empfindlichkeit abgetastet. Um dabei nicht stets auf bestimmte Bereiche festgelegt zu sein, sieht eine zweckmäßige Ausgestaltung der Erfindung vor, daß die Bereiche der abzutastenden Fläche, die mit höherer oder niedrigerer Empfindlichkeit abgetastet werden sollen, wählbar sind. Die Meßmarken sind daher auch gemäß einer bevorzugten Ausgestaltung der Erfindung in Bereichen außerhalb der Sicherheitsfäden und der vorgesehenen Wasserzeichen, also im Bogenzwischenbereich, angeordnet.

Die Erfindung wird nachstehend anhand der Zeichnungen näher erläutert.

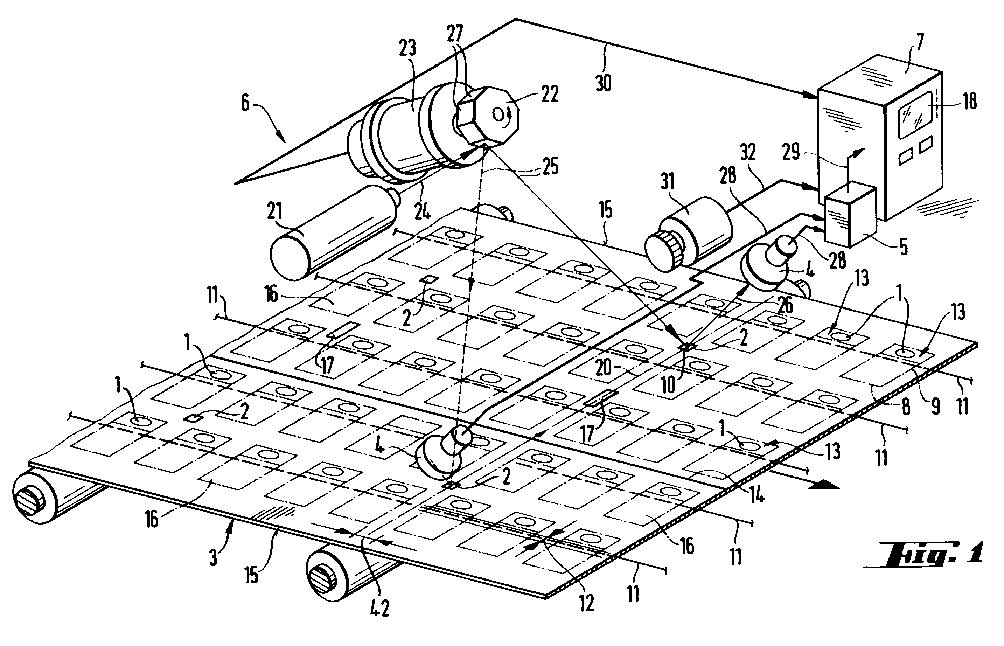

- Fig. 1 und 2: zeigen schematisch in perspektivischer Darstellung Prüfvorrichtungen, wobei Fig. 1 die Reflexionsmessung, Fig. 2 die Transmissionsmessung zeigt,
- Fig. 3: zeigt in starker Vergrößerung eine perspektivische Vorderansicht eines Wertpapieres im Schnitt,

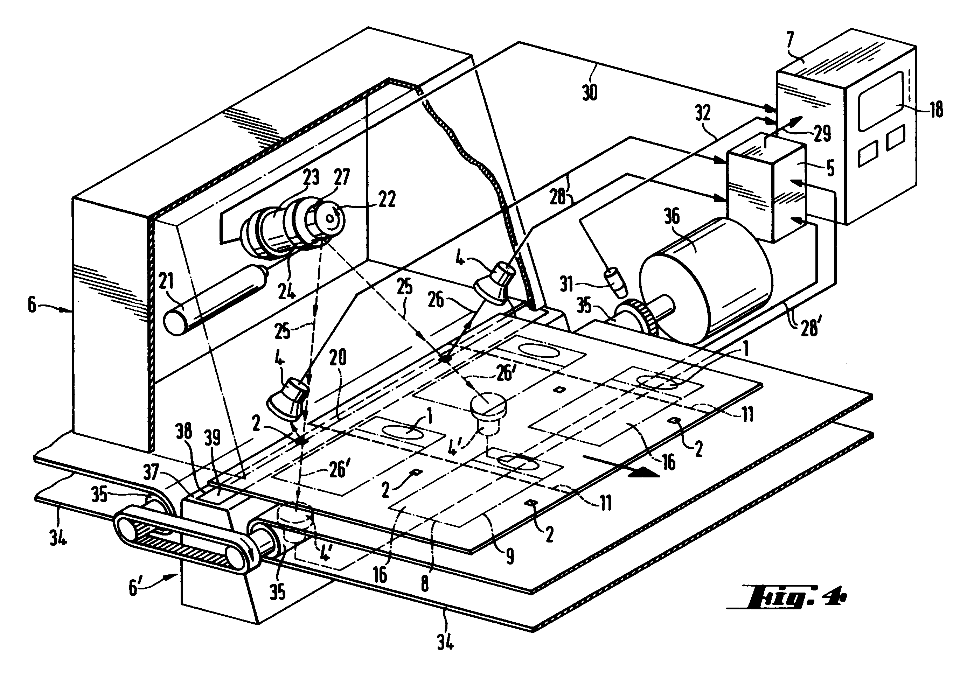

- Fig. 4: die kombinierte Transmission-Reflexionsmessung.

Die auf der nicht dargestellten Papiermaschine gefertigte Papierbahn (3) weist Wasserzeichen (1) und ebenfalls in Form von Wasserzeichen eingebrachte Meßmarken (2) auf. Diese Papierbahn (3) wird in der Papiermaschine zu sogenannten Tambouren aufgewickelt, die nach Längen- und Breitenunterteilung auf einem Rollenschneider zu Mutterrollen umgewickelt werden und als solche in die Wertpapierfabrikation gelangen. Je nach Art des zu fertigenden Wertpapieres werden sie hier über einen Querschneider bereits in Nutzen (16) unterteilt, d. h. zu Formatpapieren geschnitten, die dann als solche bedruckt oder vorher im Rotationsdruck bedruckt und dann über einen Querschneider zu Nutzen (16) geschnitten werden.

Sowohl die endlose Bahn, also die Papierbahn (3), als auch der Nutzen (16) enthält eine Vielzahl von Wasserzeichenbereichen (13), von denen mindestens eines später im fertigen Geldschein wiederzufinden ist, ebenso ist mindestens ein Sicherheitsfaden (11) in einem Sicherheitsfadenbereich (12) angeordnet, der sich auch später in der fertigen Banknote wiederfinden läßt.

Sowohl das Einbringen des Sicherheitsfadens (11) als auch das Einbringen der Wasserzeichen (1) geschieht im Naßteil der Papiermaschine, also zu einem Zeitpunkt, wo die Bildung der Papierbahn (3) noch nicht abgeschlossen ist, d. h., daß es durch Faserbewegungen zu einer Verschiebung des Sicherheitsfadens (11) und zu einer Beeinträchtigung der Klarheit der Wasserzeichen (1) kommen kann. Aus diesem Grunde müssen Toleranzfelder festgelegt werden, innerhalb deren sowohl die Wasserzeichen (1) als auch andererseits der Sicherheitsfaden (11) in der Papierbahn (3) vorhanden sein muß. Diese Toleranzfelder werden als Sicherheitsfadenbereich (12) bzw. Wasserzeichenbereich (13) bezeichnet.

Da die Papierkanten (15) so, wie sie auf der Papiermaschine entstehen, immer etwas fließend sind, können sie bloß für grobe Steuerungen als Ausgangslinie dienen. Bei der Wertpapierfertigung hat es sich daher eingebürgert, in der Papierbahn (3) längs eine Bezugslinie vorzusehen, die ebenfalls wie die Wasserzeichen (1) durch das die Papierbahn (3) formierende Sieb der Papiermaschine oder einen darauf laufenden Egoutteur eingebracht wird. Diese Bezugslinie wird als tracking line (14) bezeichnet. Sie kann nahe am Längsrand der Papierbahn (3) angeordnet sein, also in der Nähe der Papierkante (15), es ist aber auch möglich, sie weiter in das Innere der Papierbahn zu verlegen, so daß sie zwischen zwei Nutzen (16) verläuft.

Außer dem Einbringen der tracking line (14) sah der Stand der Technik das Einbringen von Steuermarken (17) vor. Die tracking line (14) diente bisher der Steuerung der Rollenschneider, also der Aggregate, die eine Längsaufteilung des Tambours bzw. der Mutterrollen vornahmen, die Steuermarke (17) dient zum Steuern des Querschneiders, der bei jeder Steuermarke (17) einen Schnitt vornimmt. Ist das Papier gedehnt, so ergeben sich dadurch Bögen (33), die eine Bogenlänge (8) aufweist, die über der geforderten Länge liegt und damit nicht verwandt werden kann. Ist das Papier geschrumpft, so ergibt sich dementsprechend ein zu kurzer Bogen (33). Diese Steuerungen reichen jedoch für eine exakte Vermessung eines Nutzen (16) auf Bogenlänge (8) und Bogenbreite (9) nicht aus, so daß die einzelnen Nutzen (16) bisher von Hand auf Länge, das Vorhandensein von Wasserzeichen (1) und Sicherheitsfaden (11) sowie auf die Anordnung der Wasserzeichen (1) im Wasserzeichenbereich (13) und das Vorhandensein des Sicherheitsfaden (11) im Sicherheitsfadenbereich (12) überprüft werden mußten, wobei auch evtl. Fehler im Papier mit überprüft wurden, da auch eine maschinelle oder mechanische Papierprüfung als solche aufgrund der eingebrachten Wasserzeichen (1) und Sicherheitsfäden (11) nicht möglich war.

Durch das Einbringen von scharfkantigen Meßmarken (2) in die Papierbahn (3) wird die Grundlage für eine elektronische, automatische Prüfung geschaffen.

Aus einem in einem Meßkopf (6) angeordneten Laserstrahler (21) wird der Laserstrahl (24) auf das Spiegelrad (22) gerichtet, das durch den Spiegelradmotor (23) angetrieben wird. Der von den Facetten (27) des rotierenden Spiegelrades (22) reflektierte Abtaststrahl (25) bildet auf der Papierbahn (3) aufgrund der Bewegung des fliegenden Lichtpunktes (10) eine Abtastlinie (20), die sich über die gesamte Breite der Papierbahn (3) erstreckt.

Das von der Papierbahn (3) reflektierte Licht gelangt als Reflexionsstrahl (26) bzw. als Transmissionsstrahl (26'), wenn im Durchlichtverfahren gearbeitet wird, auf die fotoelektrischen Wandler (4) bzw. (4,) und wird von diesem über die Meßleitung (28, 28') dem Meßmarkenrechner (5) zugeführt, der über die Verbindungsleitung (29) mit dem Auswerterechner (7), in den ein Monitor (18) integriert ist, verbunden ist.

Der Auswerterechner (7) ist ferner über eine Impulsleitung (30) mit dem Meßkopf (6) verbunden, in dem eine nicht dargestellte X-Kalibrierung angeordnet ist. Diese X-Kalibrierung erlaubt es, die jeweilige Position des fliegenden Lichtpunktes (10) auf der Papierbahn (3) und damit Koordinaten, sauber zu definieren.

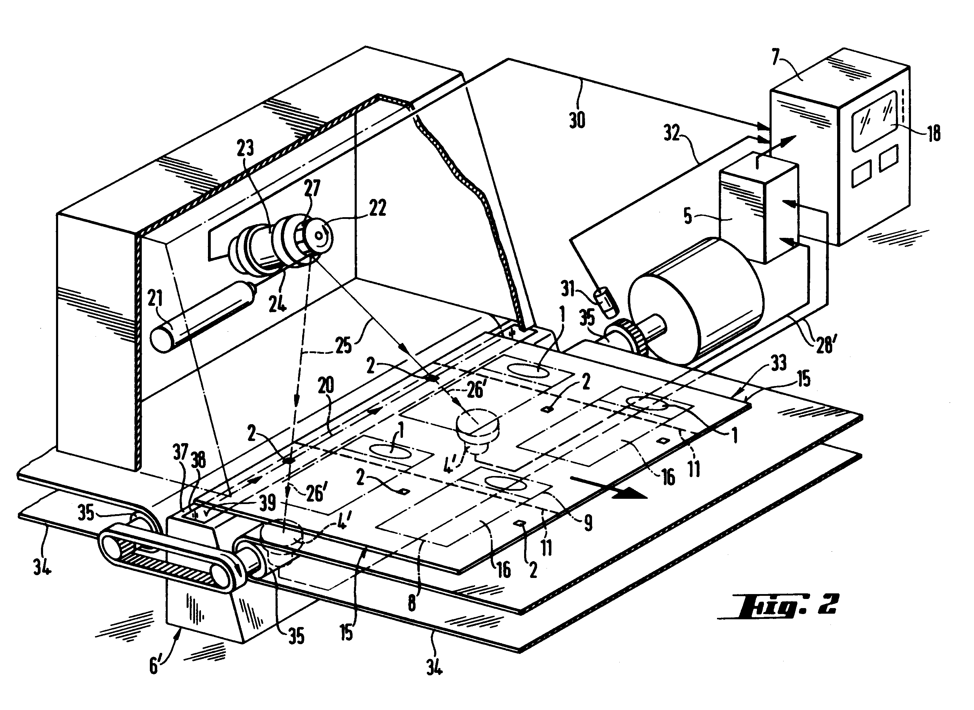

Werden, wie in Fig. 2 dargestellt, einzelne Bögen (33), die mehrere Nutzen (16) enthalten, geprüft, so sind diese auf Förderbändern (34) angeordnet, die, geführt durch Walzen (35), die über einen Elektromotor (36) angetrieben werden, die Bögen (33) über die Abdeckung (37) des zwischen den Förderbändern (34) unterhalb der Papierbahn (33) angeordneten Meßkopfes (6') fördern, wobei dieser Meßkopf (6') in seiner Abdeckung (37) mit einem sich über die volle Papierbahnbreite erstreckenden, durch eine Glasplatte (39) abgedeckten Schlitz (38), versehen ist. Der Abtaststrahl (25) tritt durch die zu prüfende Papierbahn (3) hindurch, passiert den Schlitz (38) und die Glasplatte (39), wird von dem fotoelektrischen Wandler (4') erfaßt und über die Meßleitung (28') dem Meßmarkenrechner (5) zugeführt, der seinerseits mit dem Auswerterechner (7) verbunden ist. Die Lage der Bögen (33) auf dem Förderband (34) kann durch Vergleich der X-Y-Koordinaten der Meßmarken (2) mit Impulsen, die über die Taktleitung (32) vom Taktgeber (31) an den Auswerterechner (7) gelangen, ermittelt werden.

Über dem im Auswerterechner (7) integrierten Monitor (18) kann das Ergebnis der Prüfung sichtbar gemacht werden, d. h., daß Abweichungen in Bezug auf Bogenlänge (8), Bogenbreite (9), Lage der Wasserzeichen (1) oder des Sicherheitsfaden (11) sowie ein evtl. vorhandener Verzug grafisch oder in Form von Tabellen sichtbar gemacht werden. Durch Vergleich mit vorgegebenen Konstanten, die wählbar sind, und durch wählbare Toleranzfelder zu diesen Konstanten, kann zwischen guten und nicht verwendungsfähigen Nutzen (16) unterschieden werden. Daraus resultierende Signale können zur Markierung der auszusortierenden Bogen (33) bzw. direkt zum Ausschleusen der einzelnen Bogen (33) über eine Taktweiche genutzt werden.

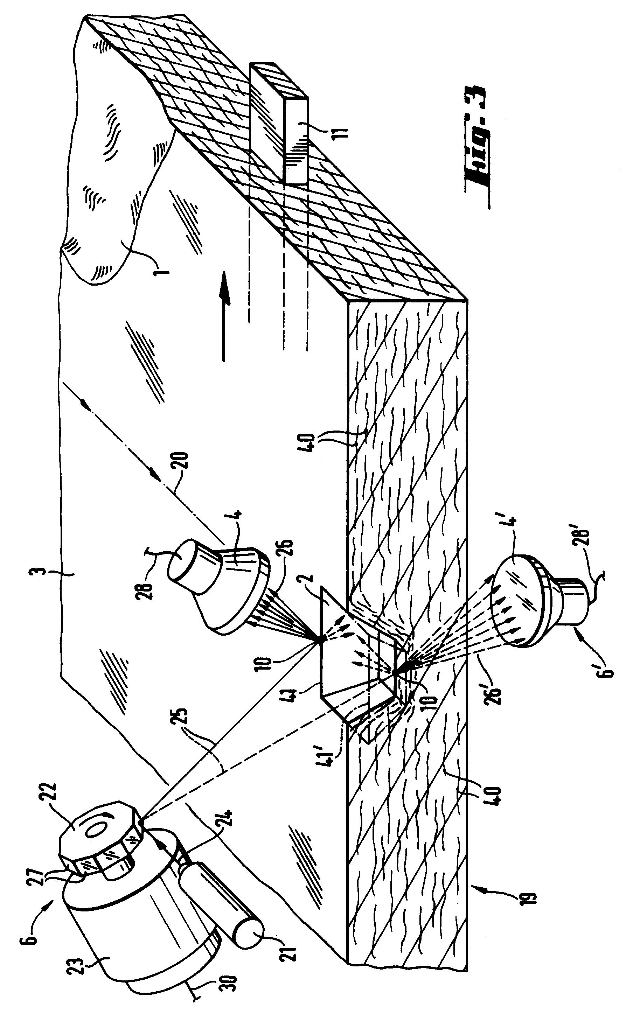

Die Fig. 3 zeigt in stark vergrößertem Maßstab einen Schnitt durch ein Wertpapier (19), in dem sich eine Meßmarke (2) befindet. Diese Meßmarke (2) besteht aus einer pyramidenstumpfförmigen Vertiefung, die eine quadratische Grundfläche mit einer Seitenlänge von 2 mm aufweist und bei der Formierung der Papierbahn (3) im Naßteil der Papiermaschine eingebracht worden ist. Wie klar ersichtlich, weist dieser Bereich der Papierbahn (3) wesentlich weniger Fasern (40), aus denen die Papierbahn (3) aufgebaut ist, auf als der übrige Bereich. Trifft also der Abtaststrahl (25) auf eine Meßmarke (2), so ändert sich sowohl die Lichtstärke des rückgestreuten Lichtes als auch die Lichtstärke des durchgelassenen Lichtes. Da die Meßmarke (2) - abweichend von üblichen Wasserzeichen - durch einen von scharfen Kanten begrenzten Körper erzeugt wurde und eine relativ große Tiefe aufweist, ergibt sich in dem Moment, wenn der Abtaststrahl (25) die Meßmarkenkante (41) passiert, ein signifikanter Kantenimpuls, dem an der zweiten Meßmarkenkante (41') im Mikrosekundenbereich ein zweiter, gleichstarker Impuls folgt. Diese Impulse sind auch dann noch sehr gut auswertbar, wenn es sich um relativ starke Papiere handelt, die in Transmission geprüft werden oder um solche mit schlecht reflektierenden Oberflächen, da sich der Kantenimpuls deutlich, weil er schlagartig auftritt, von der ggf. ungleichmäßigen Verteilung der Fasern (40) innerhalb der Papierbahn (3), der sogenannten Wolkigkeit des Papieres, unterscheidet und sich auch von den üblichen Wasserzeichen (1), die zur Kennzeichnung in Wertpapieren (19) angeordnet sind, abhebt.

Um jegliche Überschneidungen zu vermeiden, sind die Meßmarken (2) im Zwischenbereich (42) zwischen den einzelnen Nutzen (16) angeordnet, also in einem Bereich, der nach dem Zuschneiden des bedruckten Bogens (33) lediglich als Abfall anfällt.

## Patentansprüche

1. Verfahren zum Erfassen von Dimensionsfehlern und/oder dem Verzug von mit Wasserzeichen (1) versehenen Papieren, wie Formatpapieren (33), insbesondere Wertpapieren, wobei bei der Papierherstellung in der Naßpartie der Papiermaschine Zusätzlich zu den vorgesehenen Wasseizeichen (1) pro Bogenbereich mindestens zwei, sich im Bogenzwischenbereich (42) gegenüberliegende Meßmarken (2) als Wasserzeichen eingebracht werden,
die im Vergleich zur Breite der Papierbahn (3) klein, jedoch größer als der Durchmesser des abtastenden Lichtpunktes (10) sind und wobei diese Meßmarken (2) scharfkantig und kontrastreich ausgebildet sind,
die fertige Papierbahn (3) oder die Formatpapiere (33) mit einem fliegenden Lichtpunkt (10) abgetastet, das reflektierte oder durchgelassene Licht über fotoelektrische Wandler (4, 4') erfaßt und
die aus den Meßmarken (2) herrührenden Impulse im Analogsignal von einem Meßmarkenrechner (5) ausgewertet werden,
die vom Meßmarkenrechner (5) ermittelten Werte einem Auswerterechner (7) übergeben werden,
der die X-Y-Positionen der einzelnen Meßmarken (2) miteinander vergleicht und daraus die Bogenlänge (8), die Bogenbreite (9) und den Bogenverzug berechnet.

2. Verfahren nach Anspruch 1, dadurch gekennzeichnet, daß als Meßmarken (2) Vertiefungen mit quadratischer Grundfläche mit einer Seitenlänge von 2 bis 5 mm eingebracht werden.

3. Verfahren nach einem der Ansprüche 1 und 2, dadurch gekennzeichnet, daß die Tiefe der Meßmarken (2) 40 bis 80 % der Papierdicke beträgt.

4. Verfahren nach einem der Ansprüche 1 bis 3, dadurch gekennzeichnet, daß der fliegende Lichtpunkt (10) einen Durchmesser zwischen 500 und 1.200 µ aufweist.

5. Verfahren nach einem der Ansprüche 1 bis 4, dadurch gekennzeichnet, daß die Kantenimpulse der Meßmarken (2) ausgewertet werden.

6. Verfahren nach einem der Ansprüche 1 bis 5, dadurch gekennzeichnet, daß die Abtastung einzelner Bereiche der Papierbahn (3) bzw. des Formatpapieres (33) mit unterschiedlicher Empfindlichkeit erfolgt.

7. Verfahren nach einem der Ansprüche 1 bis 6, dadurch gekennzeichnet, daß die Bereiche der abzutastenden Fläche, die mit höherer oder niedrigerer Empfindlichkeit abgetastet werden sollen, wählbar sind.

8. Verfahren nach einem der Ansprüche 1 bis 7, dadurch gekennzeichnet, daß die Meßmarken (2) in Bereichen außerhalb der Sicherheitsfäden (11) und außerhalb der vorgesehenen Wasserzeichen (1) angeordnet werden.

## Claims

1. Process for detecting dimensional errors and/or distortion of papers provided with water marks (1), such as format papers (33), especially paper money, wherein, during manufacture of the paper in the wet part of the paper machine, in addition to the provided water marks, at least two measuring marks (2) are made per sheet region in the form of water marks which lie opposite each other in the inter-sheet region (42) and are small in comparison with the width of the paper web (3) but larger than the diameter of the scanning light spot (10) and these measuring marks (2) being sharp-edged and of high contrast, the finished paper web (3) or the format papers (33) are scanned with a flying light spot (10), the reflected or transmitted light is detected by means of photo-electric transducers (4, 4') and
the pulses originating from the measuring marks (2) are evaluated in analogue form by a measuring mark computer (5),
the values determined by the measuring mark computer (5) are passed to an evaluating computer (7) which compares the X-Y-positions of the individual measuring marks (2) with each other and calculates therefrom the length (8) of the sheet, the width (9) of the sheet and the distortion of the sheet.

2. Process according to claim 1, characterised in that depressions having a square base face with a side length of from 2 to 5 mm are made as measuring marks (2).

3. Process according to either of claims 1 and 2, characterised in that the depth of the measuring marks (2) is from 40 to 80 % of the depth of the paper.

4. Process according to any one of claims 1 to 3, characterised in that the flying light spot (10) has a diameter of from 500 to 1200 µ.

5. Process according to any one of claims 1 to 4, characterised in that the edge pulses of the measuring marks (2) are evaluated.

6. Process according to any one of claims 1 to 5, characterised in that the scanning of individual regions of the paper web (3) or the format paper (33) is carried out with differing sensitivity.

7. Process according to any one of claims 1 to 6, characterised in that the regions of the area to be scanned that are to be scanned with greater or lesser sensitivity are selectable.

8. Process according to any one of claims 1 to 7, characterised in that the measuring marks (2) are arranged in regions outside the security threads (11) and outside the provided water marks (1).

## Revendications

1. Procédé de détection de défauts dimensionnels et/ou de la déformation de papiers filigranés, tels que des papiers à découper au format (33), notamment des papiers fiduciaires procédé selon lequel lors de la fabrication du papier, dans la partie humide de la machine à papier, on applique en plus des filigranes prévus, pour chaque zone de feuille, au moins deux repères de mesure (2) en filigrane situés en vis-à-vis dans l'espace intermédiaire, lesquels repères sont petits par rapport à la largeur de la bande de papier (3), mais ont une dimension supérieure au diamètre du point lumineux (10) de palpage, ont des arêtes vives et sont contrastés,
on palpe la bande de papier (3) terminée ou les papiers au format (33) à l'aide d'un point lumineux (10) mobile et on mesure la lumière réfléchie ou la lumière transmise au moyen de cellules photo-électriques (4, 4'),
on exploite les impulsions du signal analogique provenant des repères de mesure (2) au moyen d'un calculateur de repères (5),
on transmet les valeurs calculées par le calculateur de repères (5) à un calculateur de traitement (7) qui compare entre elles les positions X-Y des différents repères de mesure (2) et calcule à partir de celles-ci la longueur (8), la largeur (9) et la déformation de la feuille.

2. Procédé selon la revendication l, caractérisé par le fait que les repères de mesure (2) sont constitués par des creux de surface de base carrée avec une longueur de côté comprise entre 2 et 5 mm.

3. Procédé selon l'une des revendications 1 et 2, caractérisé par le fait que la profondeur des repères de mesure (2) représente 40 à 80 % de l'épaisseur du papier.

4. Procédé selon l'une des revendications 1 à 3, caractérisé par le fait que le point lumineux (10) mobile a un diamètre compris entre 500 et 1200 µm.

5. Procédé selon l'une des revendications 1 à 5, caractérisé par le fait que l'on exploite les impulsions correspondant aux arêtes des repères de mesure (2).

6. Procédé selon l'une de revendications 1 à 5, caractérisé par le fait que l'on procède au palpage des différentes zones de la bande de papier (3) ou du format (33) avec différentes sensibilités.

7. Procédé selon l'une des revendications 1 à 6, caractérisé par le fait que l'on peut sélectionner les zones de la surface à balayer qui seront palpées avec une sensibilité plus élevée ou plus faible.

8. Procédé selon l'une des revendications 1 à 7, caractérisé par le fait que les repères de mesure (2) sont disposés dans des zones situées en dehors des fils de sécurité (11) et en dehors des filigranes (1) prévus.
